# EUROPEAN PATENT APPLICATION

(11) **EP 4 768 453 A1**
(43) Date of publication of application: **01.07.2026**
(21) Application number: 24875747.8
(22) Date of filing: 11.01.2024
(51) Int. Cl.: C02F 3/30

(54) **METHOD FOR TREATING WASTEWATER IN URBAN WASTEWATER TREATMENT PLANTS**

(30) Priority: 25.10.2023 ES 202330879
(71) Applicant: GS Inima Environment, S.A.U., 28023 Madrid (ES)
(72) Inventor: COLPRIM GALCERAN, Jesus, 17820 BANYOLES (ES); BALDI COLL, Mercè, 08197 VALLDOREIX (ES); CARBO MONMANY, Oriol, 08201 SABADELL (ES)
(74) Representative: Furio, Cristina
(86) International application number: PCT/ES2024/070015
(87) International publication number: WO 2025/088230

(57) **Abstract**

The present invention relates to a method for treating wastewater in urban wastewater treatment plants that comprises a first step in which urban wastewater is subjected to controlled aeration in a first reactor and passes to a solids settler under the effect of gravity, the water coming out of the settler due to overflowing; a second step of partial nitritation with aerobic granular sludge in a biological reactor, in which the COD (Chemical Oxygen Demand) at values below 125 ppm and the suspended solids at values below 35 ppm are removed from the wastewater, and partial nitritation of the ammonium coming out of the biological reactor with a NO27NH4+ ratio suitable for subsequent autotrophic nitrogen removal; and a third step of anaerobic oxidation of ammonium in a granular ANAMMOX biomass biological reactor.

## Description

### Technical field.

The present invention relates to a method applicable in wastewater engineering, suitable for treating wastewater in urban wastewater treatment plants (WWTPs).

### Prior art

Currently, there are various technologies based on activated sludge for treating wastewater, with different technologies being used depending on the type of wastewater to be treated and the space available.

Below are some of the technologies currently used separately in different methods for treating wastewater.

The high-load activated sludge process based on bioflocculation, adsorption and bioaccumulation of organic compounds was developed to capture the organic matter present in wastewater and minimise biological oxidation.

High-load activated sludge technology allows the diversion of organic matter to the sludge line to produce biogas to be maximised.

Aerobic granular sludge technology is implemented in treating urban wastewater to treat pretreatment or primary settling effluents and to carry out conventional complete nitrification. In complete nitrification, ammonium is first converted to nitrite and then to nitrate. A drawback of this technology is that it requires significant amounts of energy to provide the oxygen necessary to carry out complete nitrification, to the extent that aeration costs are the main energy cost in an urban wastewater treatment plant.

Current treatment technologies expend significant amounts of energy to provide the oxygen needed to carry out conventional nitrification.

Based on aerobic granular technology, there is the well-known Nereda^{®} system, developed by Royal Haskoning DHV consisting of a treatment plant with a single type of aerobic granular sludge reactor with a specific geometry and particularities.

The technology based on granular ANAMMOX^{®} biomass (autotrophic biomass that oxidises ammonium and nitrite to nitrogen gas), developed by PAQUES and used to treat industrial water and return water from treatment plants under conditions of high loads and temperatures that are radically different from those found in the main water line of wastewater treatment plants, is also known.

Current wastewater treatment technologies do not optimise the diversion of organic matter to the sludge line to maximise biogas production

On the other hand, attempts to incorporate ANAMMOX biomass into methods for treating wastewater in the main treatment line have so far failed to achieve method stability.

Current technology has only been able to develop aerobic granular sludge to directly treat the water entering treatment plants, or settled water with a high concentration of organic matter that facilitates the development of granular biomass and heterotrophic denitrification of nitrogen. In the proposed method, the high-load activated sludge effluent with a lower concentration of organic load is used. By continuously and sequentially feeding different lines of sequential biological reactors (SBR) operating at constant volume and with volume exchanges of 40% up to 70%, and by means of selective purging, granular sludge is developed by using water coming from a high-load activated sludge process, and nitrification to nitrite is partially halted.

As for autotrophic anaerobic oxidation of ammonium, it has only been developed to treat returns from anaerobic digestion units, with high concentrations of nitrogen and temperatures, and this technology is not being used in the treating water from the main line of a wastewater treatment plant due to the technical difficulties involved.

In order to remove nitrogen from the main line of an urban treatment plant in an autotrophic manner, low concentrations of ammonium and low temperatures in winter must be addressed.

The technical problem that arises is the development of a method for treating wastewater that provides significant energy savings compared to the current technique and a technical advance that solves the difficulty of controlling the method and allows for the autotrophic nitrogen removal in the main water line in a stable manner.

### Description of the invention.

The method of the invention is based on the combination of three consecutive treatment steps, including a first high-load activated sludge reactor, an aerobic granular sludge reactor capable of partial nitritation of ammonium and a third reactor for anaerobic oxidation of ammonium. The combination of the three reactors, in the form of operation described here, provides energy savings in the overall method and a technical breakthrough, as it solves the major difficulty of stable control of autotrophic nitrogen removal in the water line of a WWTP.

This method is based on adapting aerobic granular sludge technology to partial nitrification to treat low-load water in the main line of a wastewater treatment plant by partially oxidising ammonium to nitrite and obtaining an effluent suitable for the method of anaerobic ammonium oxidation in the water line. The influent to the aerobic granular reactor is water from a high-load activated sludge reactor. To date, the combination of these technologies has not been implemented due to the technical difficulty involved in combining them.

The method for treating wastewater in urban wastewater treatment plants, object of the invention, comprises the following steps:
- a first step consisting of a high-load biological treatment in which the urban wastewater to be treated is held in a first reactor for a retention time of less than 1 hour and is subjected to controlled aeration by means of an oxygen probe at a dissolved oxygen concentration of less than 1 ppm and then passes through a settler in which the solids settle by gravity and the water treated in said first step comes out of the settler due to overflowing;
- a second step of in an aerobic granular biological reactor, in which the COD (Chemical Oxygen Demand) at values below 125 ppm and the suspended solids at values below 35 ppm are removed from the wastewater, and by means of controlling the volume exchanged, the age of the sludge, the length of the cycles and the concentration of oxygen dissolved during the aeration phase, a partial nitritation is performed on the ammonium coming out of the biological reactor with a NO₂₋/NH₄₊ ratio suitable for subsequent autotrophic nitrogen removal, and
- a third step of anaerobic oxidation of ammonium in an ANAMMOX biomass biological reactor, which removes total nitrogen at values below 6 ppm from the wastewater.

The combination of these three steps in treating wastewater allows significant energy savings and a technical breakthrough in the stability and control of autotrophic nitrogen removal to be achieved.

With the method of the invention, first the organic matter with high-load activated sludge is derived, then an adapted aerobic granular reactor is used to perform partial nitrification of nitrogen (significant energy savings in aeration), and finally ANAMMOX technology is used to remove the nitrogen in a completely anaerobic and autotrophic manner (without the need for air or organic matter).

The scheme resulting from the method of the invention comprises a first step of high-load activated sludge with a high organic matter diversion to the sludge line, followed by a second step in a reactor with aerobic granular sludge adapted to partial nitritation at low loads and low temperatures, designed to create an influent suitable for finally performing anaerobic oxidation of ammonium in the third step.

The first step of the invention comprises recirculating the settled solids back to the first reactor, except for a part that is purged from the system, maintaining a concentration of the suspended solids in the first reactor below 3000 ppm. In this first step, 40 to 60% of the COD (Chemical Oxygen Demand) is removed from the wastewater.

The second step is performed in a reactor consisting of several lines or vessels fed from the lower part through the settled sludge bed and fed sequentially. Each vessel alternates cyclically between simultaneous feed/overflow (constant level), aeration and settling phases. **In** the feed phase, approximately 50% of the volume is exchanged. At the end of each settling phase, the excess solids are laterally purged. Granular sludge and flocculent sludge coexist in the vessels.

A concentration of free nitrous acid (FNA) inhibits nitrite-oxidising bacteria NOB so that the water comes out with an ammonium/nitrite ratio close to 1.32. The retention time in this second step is less than 14 hours.

Each line is fed through the bottom of the reactor by means of gratings that ensure homogeneous distribution throughout the bottom of the reactor. The aeration system is arranged below the reactor feed grating.

Each reactor line operates for several cycles per day. Each cycle has at least one feed/overflow cycle, one aeration cycle and one settling cycle.

On the upper surface of the reactor there is a homogeneous system for collecting the clarified water by means of channels or pipes that allow the treated water to be evacuated during the feed phase.

Below the evacuation system there is a valve or gate that allows the liquid level to be lowered below the evacuation system if necessary to prevent it from filling with solids during the aeration phase. The reactor has a purge system to purge the suspended biomass above the level of the settled granules. Aeration is controlled to achieve the desired concentration of ammonium and/or NO₂₋/NH₄. ratio by means of ammonium and pH probes. Rx, nitrite and nitrate probes may also be used to control aeration.

Another advantage of the method of the invention, combining the three indicated steps, is that it inhibits the growth of nitrite-oxidising bacteria (NOB) and provides favourable conditions for the third ANAMMOX step that have not previously been achieved in a stable manner in the water line of an urban wastewater treatment plant.

The second step with aerobic granular sludge for partial nitritation ensures an effluent with low concentrations of solids and organic matter, which are dangerous for the ANAMMOX process, and in turn achieves autotrophic nitrogen removal in two separate steps (second and third steps of this process) to minimise aeration energy consumption, organic matter requirements and volume required.

The application of partial nitritation in the second step saves up to 50% of the oxygen used for nitrogen removal compared to conventional complete nitrification.

The third step, fed with effluent water from the second step, is performed in a stirred reactor with granular ANAMMOX biomass in which bacteria remove nitrogen in an anaerobic and autotrophic manner, and the water comes out the clarification zone meeting the following discharge quality:

| **Parameter** | **Concentration** |
|---|---|
| Chemical Oxygen Demand (COD) | < 125 mg/l O₂ |
| Biochemical oxygen demand (BOD, 5 to 20°C) without nitrification (2) | < 25 mg/l O₂ |
| Total suspended solids. | < 35 mg/l |
| Total nitrogen | < 6 mg/l |

The application of ANAMMOX technology in this third treatment step in the water line allows the maximum amount of organic matter to be diverted to biogas production, as it is not required for conventional denitrification. The incremental biogas produced can be used to generate electricity by reducing the energy consumption of the WWTP, or as pretreated biomethane.

As mentioned above, the method of invention is the combination of the three steps indicated, and is a modification of the diagram of the basic method of a conventional treatment plant, providing a number of advantages, including the following:
- it is a step towards the goal of reducing greenhouse gases by reducing the energy consumption of urban treatment plants, which are currently large consumers of electrical energy;
- it allows for controlling the method in the main water line which, thanks to the concentration of free nitrous acid (FNA) obtained and together with the granules, gives stability to the partial nitritation method, allowing the autotrophic reduction of ammonium in two steps at low temperatures and low loads;
- as it does not require secondary settling, it is a more compact solution than the conventional primary settling treatment plus biological treatment of activated sludge with nutrient removal, reducing the environmental impact associated with the construction of wastewater treatment plants and freeing up space for other uses.

If it were necessary to reduce the concentration of phosphorus in the effluent, the invention contemplates that the method of treatment may comprise a dosage of FeCl₃ in any step of said method.

If the ammonium/alkalinity ratio of the raw water is too low and the necessary level of free nitrous acid (FNA) is not achieved in the reactor to inhibit the growth of nitrite-oxidising bacteria (NOB), the invention comprises an increase in the ammonium/alkalinity ratio of the influent by means of dosing acid in the second step.

Having sufficiently described the nature of the invention, it is hereby stated for the appropriate purposes that the method described above may be modified as deemed appropriate, provided that this does not imply an alteration of the essential features of the invention that are claimed below.

## Claims

1. A method for treating wastewater in urban wastewater treatment plants, that comprises:
- a first step consisting of a high-load biological treatment in which the urban wastewater to be treated is held in a first reactor for a retention time of less than 1 hour, the wastewater being subjected to controlled aeration by means of an oxygen probe at a dissolved oxygen concentration of less than 1 ppm and then passes through a settler in which the solids settle by gravity and the water treated in said first step comes out of the settler due to overflowing;
- a second step of partial nitritation with aerobic granular sludge in a biological reactor, in which the COD (Chemical Oxygen Demand) at values below 125 ppm and the suspended solids at values below 35 ppm are removed from the wastewater and by means of controlling the age of the sludge and/or the length of the cycles and/or the concentration of oxygen dissolved during the aeration phase, partial nitritation is performed on the ammonium coming out of the biological reactor with a NO₂₋/NH₄₊ ratio suitable for subsequent autotrophic nitrogen removal, and
- a third step of anaerobic oxidation of ammonium in a granular ANAMMOX biomass biological reactor, in which total nitrogen at values below 6 ppm is removed from the wastewater.

2. The method for treating wastewater according to claim 1, wherein the first step comprises recirculating the settled solids back to the first reactor, except for a part that is purged from the system, maintaining a concentration of the suspended solids in the first reactor below 3000 ppm.

3. The method for treating wastewater according to any preceding claim, comprising a reduction in the concentration of phosphorus in the effluent by means of dosing FeCl₃ in any step of the method.

4. The method for treating wastewater according to any preceding claim, comprising an increase in the ammonium/alkalinity ratio of the influent by means of dosing acid in the second step.
